(19) Europäisches Patentamt / European Patent Office / Office européen des brevets

(11) **EP 3 845 991 B1**

(12) **EUROPEAN PATENT SPECIFICATION**

(45) Date of publication and mention
of the grant of the patent:
**03.08.2022   Bulletin 2022/31**

(21) Application number: **20150225.9**

(22) Date of filing: **03.01.2020**

(51) International Patent Classification (IPC):
***G05D 1/02*** *(2020.01)*

(52) Cooperative Patent Classification (CPC):
**G05D 1/0027;** G05D 2201/0213

(54) **METHOD FOR INVOKING A TELE-OPERATED DRIVING SESSION, APPARATUS FOR PERFORMING THE STEPS OF THE METHOD, VEHICLE AND COMPUTER PROGRAM**

VERFAHREN ZUM AUFRUFEN EINER FERNGESTEUERTEN FAHRSITZUNG, VORRICHTUNG ZUR DURCHFÜHRUNG DER SCHRITTE DES VERFAHRENS, FAHRZEUG UND COMPUTERPROGRAMM

PROCÉDÉ POUR APPELER UNE SESSION DE CONDUITE TÉLÉCOMMANDÉE, APPAREIL POUR RÉALISER LES ÉTAPES DU PROCÉDÉ, VÉHICULE ET PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.07.2021   Bulletin 2021/27**

(73) Proprietor: **VOLKSWAGEN AG
38440 Wolfsburg (DE)**

(72) Inventors:
• **Gonzalez Vazquez, Israel
  38442 Wolfsburg (DE)**
• **Pfadler, Andreas
  13359 Berlin (DE)**
• **Bagdonat, Thorsten
  38106 Braunschweig (DE)**
• **Kwoczek, Andreas
  38165 Lehre (DE)**

(56) References cited:
**US-B1- 10 466 694**

**Description**

The disclosure relates to a method for invoking a Tele-operated Driving session. The proposal also discloses a corresponding apparatus for performing the steps of the method and a corresponding computer program.

Tele-operated Driving (ToD) is gathering more and more interest. "Tele-operated Driving" means in this context that an external operator controls the vehicle remotely. The external operator is located in a Control Center (CC). There may be a large distance between the Control Center and the vehicle. Control Center and vehicle are connected via a radio communication system and its backhaul. Primarily the radio communication system is part of a public mobile communication system such as LTE or 5G.

Tele-operated driving belongs to safety-related time-critical applications and the requirements for the exchange of information are low latency, high data rate and high reliability.

Autonomous driving (sometimes referred to as automatic driving, automated driving or piloted driving) is the movement of vehicles, mobile robots and driverless transport systems which are largely autonomous. There are different degrees of autonomous driving. In Europe, various transport ministries, for example in Germany, the Federal Institute for Road Systems (Bundesanstalt für Straßenwesen) was involved, worked together and defined the following autonomous stages.

- Level 0: "Driver only", the driver drives himself, steers, gives gas, brakes, etc.
- Level 1: Certain assistance systems help with vehicle operation (including a cruise control system - Automatic Cruise Control ACC).
- Level 2: Partial automation. Therein, automatic parking, tracking function, general longitudinal guidance, acceleration, deceleration, etc. are taken over by the assistance systems (including collision avoidance).
- Level 3: High automation. The driver does not have to monitor the system continuously. The vehicle independently performs functions such as the triggering of the turn signal, lane change and tracking. The driver can turn to other things, but if requested, the system is requested to take over the lead within a pre-warning period. This form of autonomy is technically feasible on motorways. Legislators are working to allow Level 3 vehicles. The legal framework has already been created.
- Level 4: Full automation. The guidance of the vehicle is permanently adopted by the system. If the system is no longer able to handle the tasks, the driver can be asked to take the lead.
- Level 5: No driver required. Apart from setting the target and starting the system, no human intervention is required.

A slightly different definition of levels is known from the Society of Automotive Engineers SAE. It is referred to the SAE J3016 standard in this regard. This could also be used instead of the above given definition.

The question of how ToD is going to be implemented is not fully answered yet. ToD is seen as an enabler of the automated driving, because it will solve deadlock situations to which the automated vehicle gets caught. However, the question if a deadlock situation is existing is not an easy one to answer. Hence the method on when it has to be requested the use of ToD feature needs to be carefully defined.

An automated driving vehicle makes such decisions based on the perception of its environment as well as from predefined traffic regulations. It has been observed that an automated vehicle could then experience situations where the vehicle is no longer able to continue its planned route. Incorrect interpretation of the environment, sensor failures, poor road conditions or unidentified events could prevent that the vehicle could continue with its automated driving session. To distinguish all possible iterations to truly identify the root cause of the deadlock situation is not possible.

From US 9,507,346 B1 a teleoperation system and method for trajectory modification of autonomous vehicles is known. More specifically this includes that devices and methods are configured to initiate modification of trajectories to influence navigation of autonomous vehicles.

In US 2019/0163176 A1 a method for transferring control of an autonomous vehicle to a remote operator is presented.

In US 10,466,694 B1 a vehicle is described that is blocked on a street during autonomous use. A method is explained by which a predetermined threshold based on this situation is used so that after a predetermined time a tele-operated driving session is triggered.

What is needed is a solution for the question: How to determine reliably and automatically when a ToD session should start.

These and other objects are solved with a method according to claim 1, a corresponding apparatus for performing steps of the method according to claim 6, a vehicle according to claim 9 and a corresponding computer program according to claim 10.

The dependent claims contain advantageous developments and improvements to the method, device and computer program according to the disclosure.

To solve the problem, two generic methods could be applied to initiate a ToD session. Those which are considered to be triggered via a manual request from the inside of the vehicle (Human Interface such as: the press of a button, dictation of a voice command or any other type of human interaction method) and those to be triggered automatically and are based on different conditions which are known by the automated vehicle.

However, the inventors recognized that to identify the main reason of why a vehicle could be in the need of a ToD session on its automated driving function is proven to be a complex task.

In order to overcome the challenges to identify the root cause of why a vehicle could not continue with its automated driving, it is proposed according to the invention to use a "time-off" time as a form to trigger the "start" of a ToD session request. The tele-operator can then verify if the automated vehicle is in a deadlock situation or it only needs to wait as it is in a known area suffering a delay so it could continue after a certain time. In an extended embodiment the Control Center may in order to prevent further attempts extent this "time-off" time after the first ToD session request in case the vehicle gets into a real deadlock situation in the same area.

Therefore, a general embodiment of the invention consists in a method for invoking a ToD session comprising the steps of claim 1, for a vehicle equipped with an automated driving function, said vehicle being equipped with a number of environment detection sensors and a communication module for communicating to an external Control Center computer. This method further comprises a step of determining a time-off value for the vehicle in which it needs to wait before a ToD session may be invoked, corresponding to the current driving situation the vehicle is in, and sending said ToD session request message to said Control Center computer once the waiting time according to the determined time-off value is over.

To prevent further chain of false requests from vehicles which could be facing traffic jams or other possible delays while driving, the Control Center may set the duration of the time-off's for certain areas depending on the time which the automated vehicle is expected to wait without the need of a ToD session. Here the Control Center may collect and store data about initialized ToD sessions which were not needed and areas where automated vehicles often need support. With this information the ToD provider can propose an time-off to automated vehicles, depending on their geographical location and the traffic conditions. In order to find an appropriate time-off optimization analytic tools may be used. The time-off trigger may be updated if needed.

The method according to the invention comprises a further step of data gathering from the environment detection sensors and/or from external data sources, a step of categorizing said gathered data and selecting current elements from the categorized data sets, wherein said step of selecting current elements comprises a step of selecting those values from the categorized data sets which correspond best to the current driving situation and a step of assigning to the current elements respective time-off values. By categorizing the information about the environment of the vehicle and other internal and external conditions it is possible to filter out comparable situations where the same or at least similar time off values are appropriate. This helps to simplify the implementation of the invention.

Since typically more than one category of gathered data is present, it is advantageous to calculate an overall time-off value from the respective time-off values assigned to the selected current elements in a further step of the method.

Here, it is further advantageous if the step of calculating an overall time-off value comprises a step of calculating a mean value of the respective time-off values assigned to the current elements. In one embodiment an arithmetic mean value could be calculated according to the formula summing-up the time-off values and dividing the result through the number of selected elements.

For the step of categorizing said gathered data the method comprises a step of distributing the gathered data into at least categories such as: "areas", "weather conditions", "traffic information" and "plurality of false trigger events".

As an exemplification of this, one advantageous embodiment includes that the input category "areas" comprises at least the data elements "highway", "urban" and "rural", and the input category "weather conditions" comprises at least the data elements "snow", "hellstones", "fog" and "sunny", the input category "traffic information" comprises at least the data elements "traffic jam", "high vehicle density" and "low vehicle density", and the input category "plurality of false trigger events" comprises at least the data elements "low", "medium" and "high". This subdivision of the categories in elements could easily be refined by defining more elements.

In addition, it may help to also define a further category "Plurality of correct trigger events" for the step of categorizing said gathered data. An appropriate subdivision of this input category "Plurality of correct trigger events" comprises at least the data elements "low", "medium" and "high".

The invention also concerns an apparatus adapted for performing the steps in the method according to invention, having implemented a source code to run the method, wherein said apparatus comprises a processing device, and memory means for recording the gathered data. The processing device comprises means for determining a time-off value for the vehicle in which it needs to wait before a ToD session may be invoked, corresponding to the current driving situation the vehicle is in, and sending a ToD session request message to a Control Center computer once the waiting time according to the determined time-off value is over.

In one embodiment the apparatus comprises means for manually triggering the sending of said ToD session request message to the Control Center computer. The means include any form of performing manual control, including but not limiting, selecting a command in a user menu displayed on a screen, pressing a dedicated press button, detecting a command with speech recognition, gesture recognition and the like. This has the advantage, that in situations where the passengers in the car do not want to wait for the automatic generation of the ToD session request message they can shorten this waiting phase by directly inducing the sending of the ToD session request message by manual control.

Moreover, it is advantageous that the processing device is adapted to comprise means for selecting those current elements from categorized data sets which correspond best to the current driving situation. In this regard it is advantageous if the processing device is furthermore adapted to assign to the current elements respective time-off values, wherein the processing device comprises artificial intelligence means for determining said respective time-off values for the elements from the categorized data sets or wherein the processing device is adapted to receive said respective time-off values from the Control Center computer. In the last mentioned option the Control Center computer may comprise artificial intelligence means for determining said respective time-off values for the elements from the categorized data sets.

In a still further embodiment the invention also concerns a vehicle which is equipped with an apparatus according to the invention.

The proposal also concerns a computer program, comprising program code, which when run in a processing device of said apparatus according to the invention, performs the steps of the method according to the invention.

Exemplary embodiments of the present disclosure are shown in the drawing and are explained in greater detail in the following description.

In the drawings:

Fig. 1   illustrates the principle architecture of a V2V and V2X communication system;

Fig. 2   shows a first application scenario of Tele-operated Driving;

Fig. 3   shows a block diagram of a vehicle's electronics system;

Fig. 4   shows an overview of an example of input criteria used in an algorithm for determining if there is a need for entering a ToD session; and

Fig. 5   shows a flow chart for a computer program for implementing the proposal.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided by the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

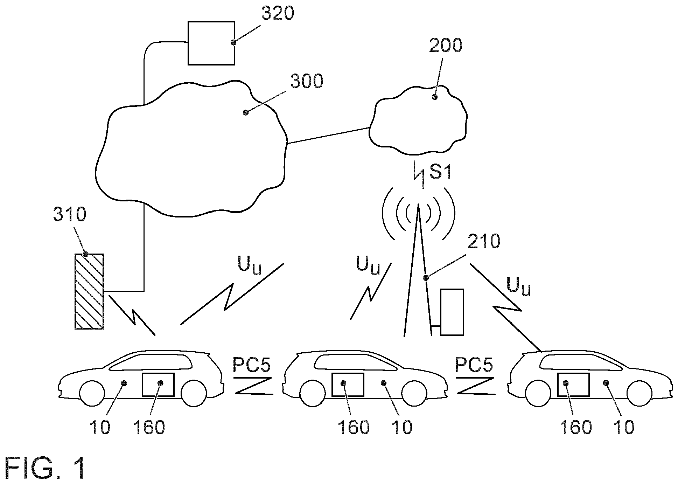

Fig. 1 shows the system architecture for the proposal. Reference number 10 denotes a vehicle. The depicted vehicle 10 is exemplified a car. Shown is a passenger car. If exemplified with a vehicle, it may be any type of a vehicle. Examples of other types of vehicles are: buses, motorcycles, commercial vehicles, in particular trucks, agricultural machinery, construction machinery, rail vehicles, etc. The use of the invention would be generally in land vehicles, rail vehicles, watercrafts and aircrafts possible. This expressively includes robots and drones. The vehicle 10 is equipped with an on-board connectivity module 160 including corresponding antenna such that the vehicle 10 can participate in any form of a mobile communication service. Fig. 1 illustrates that vehicle 10 may transmit and receive signals to and from a base station 210 of a mobile communication service provider.

Such base station 210 may be an eNodeB base station of an LTE (Long Term Evolution) mobile communication service provider or a gNB base station of a 5G mobile communication provider. The base station 210 and the corresponding equipment is part of a mobile communication network with a plurality of network cells where each cell is served by one base station 210.

The base station 210 in Fig. 1 is positioned close to a main road on which the vehicle 10 is driving. Of course, other vehicles may also drive on the road. In the terminology of LTE, a mobile terminal corresponds to a user equipment UE, which allows a user to access network services, connecting to the UTRAN or Evolved-UTRAN via the radio interface. Typically, such user equipment corresponds to a smart phone. Of course, mobile terminals are also used in the vehicles 10. The cars 10 are equipped with said on-board communication module OBU 160. This OBU corresponds to an LTE, 5G or any other communication module with which the vehicle 10 can receive mobile data in downstream direction and can send such data in upstream or in direct device-to-device direction.

In terms of the LTE mobile communication system, the Evolved UMTS Terrestrial Radio Acess Network E-UTRAN of LTE consists of a plurality of eNodeBs, providing the E-UTRA user plane (PDCP/RLC/MAC/PHY) and control plane (RRC) protocol terminations towards the UE. The eNodeBs are interconnected with each other by means of the so-called X2 interface. The eNodeBs are also connected by means of the so-called S1 interface to the EPC (Evolved Packet Core) 200, more specifically to the MME (Mobility Management Entity) by means of the S1-MME and to the Serving Gateway (S-GW) by means of the S1-U interface.

From this general architecture Fig. 1 shows that eNodeB 210 is connected to the EPC 200 via the S1 interface and that EPC 200 is connected to the Internet 300. The CC computer 320 to which the vehicles 10 send messages to and receive messages from is also connected to the Internet 300. In the field of cooperative and automated driving the CC computer 320 typically is located in a traffic CC where the operators for the ToD sessions requested by the vehicles 10 are working. Finally, an infrastructure network component is also shown. This may be exemplified by a road-side unit RSU 310. For the ease of implementation, it is considered that all components have assigned an Internet address, typically in the form of an IPv6 address, such that the packets transporting messages between the components can be routed correspondingly.

The various interfaces of the LTE network architecture are standardized. It is particularly referred to the various LTE specifications, which are publicly available for the sake of sufficiently disclosing further implementation details.

The vehicles 10 may also be equipped with means for surroundings observation. The sensor system, which is used to capture the environmental objects is based on different measuring methods depending on the application. Widespread technologies are among others RADAR corresponding to Radio Detection and Ranging, LIDAR corresponding to Light detection and ranging, cameras 2D and 3D and ultrasonic sensors.

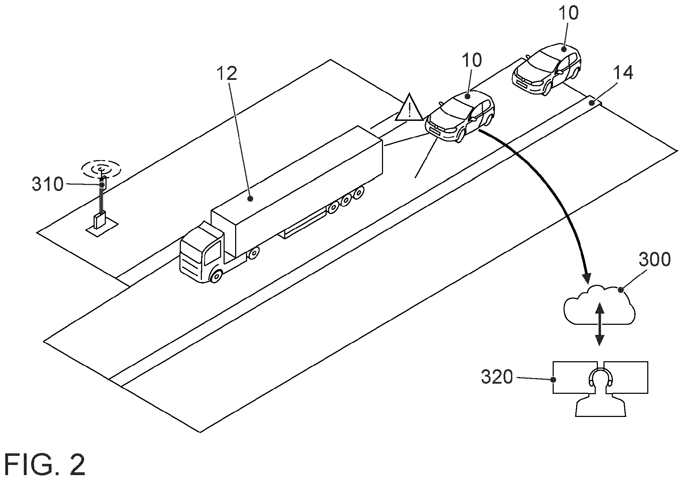

Fig. 2 depicts an example of a deadlock situation in which ToD could help to resolve the situation. A truck 12 is blocking a one-way road. Succeeding vehicles 10 are automated vehicles with level 4 or 5 automated driving capability in the need to pass this obstacle. The automated driving functionality needs to respect all the traffic regulations including traffic signs and traffic lights, etc. Since it is not an option for the automated driving function to drive over the sidewalk 14 in order to pass the truck, the vehicle 10 remains behind the truck 12 and waits until the truck 12 moves on. This however could take hours if e.g. the truck 12 is stopping inadvertently, e.g. due to a breakdown or a road accident. To overcome this deadlock situation, the vehicles 10 would need to drive over the sidewalk in order to continue their planed route.

Here, the automated vehicle 10 might not be able to identify that the truck 12 will be there for 1 minute, 1 hour or an indefinitely period of time blocking its path.

ToD would help to drive the vehicle 10 carefully with two wheels over the sidewalk 14 in order to resolve the blocking situation. To initiate a ToD session the vehicle 10 needs to decide if this situation is indeed a deadlock situation with no way out for the automated driving function of the car 10.

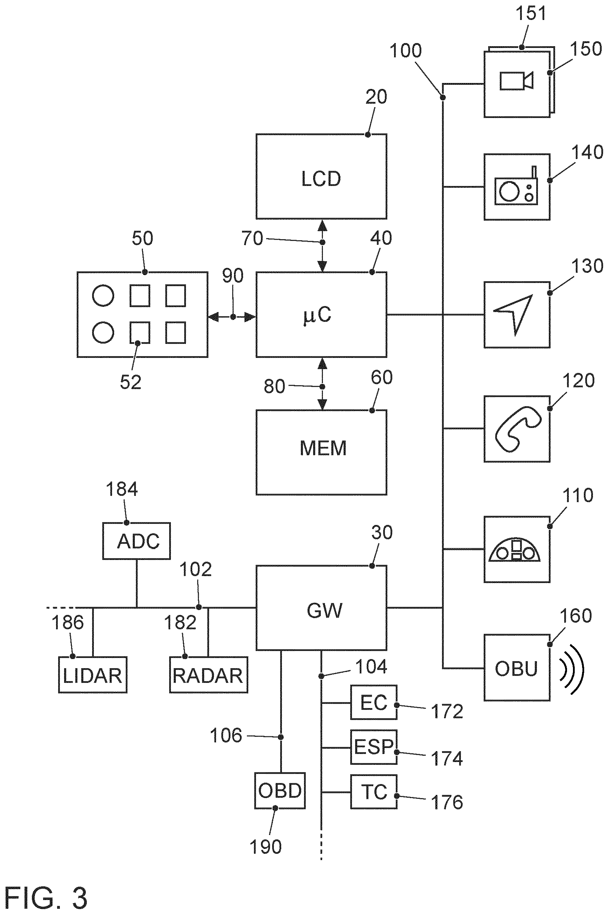

Fig. 3 shows schematically a block diagram of the vehicle's 10 board electronics system. Part of the board electronics system is an infotainment system which comprises: the touch-sensitive display unit 20, a computing device 40, an input unit 50, and a memory 60. The display unit 20 includes both a display area for displaying variable graphical information and an operator interface (touch-sensitive layer) arranged above the display area) for inputting commands by a user. With reference number 52 a press button is labelled that allows the driver to manually request a ToD session if the vehicle 10 is blocked and the driver wants the support of ToD to find a way out of the blocking situation. There is no need for a dedicated press button 52 if other techniques for manual control are used. This includes selecting an option in a user menu displayed on the display unit 20, detecting the command with speech recognition, or using gesture control means.

The memory device 60 is connected to the computing device 40 via a further data line 80. In the memory 60, a pictogram directory and / or symbol directory is deposited with the pictograms and / or symbols for possible overlays of additional information.

The other parts of the infotainment system such as camera 150, radio 140, navigation device 130, telephone 120 and instrument cluster 110 are connected via the data bus 100 with the computing device 40. As data bus 100 the high-speed variant of the CAN bus according to ISO standard 11898-2 may be taken into consideration. Alternatively, for example, the use of an Ethernet-based bus system such as IEEE 802.03cg is another example. Bus systems in which the data transmission via optical fibers happens are also usable. Examples are the MOST Bus (Media Oriented System Transport) or the D2B Bus (Domestic Digital Bus). For inbound and outbound wireless communication, the vehicle 10 is equipped with a communication module 160. It can be used for mobile communication, e.g. mobile communication according to the 5G standard.

Reference numeral 172 denotes an engine control unit. The reference numeral 174 corresponds to an ESC control unit corresponding to electronic stability control and the reference numeral 176 denotes a transmission control unit. The networking of such control units, all of which are allocated to the category of the drive train, typically occurs with the CAN bus system (controller area network) 104. Since various sensors are installed in the motor vehicle and these are no longer only connected to individual control units, such sensor data are also distributed via the bus system 104 to the individual control devices.

However, the modern vehicle 10 can also have further components such as further surroundings scanning sensors like a LIDAR (Light Detection and Ranging) sensor 186 or RADAR (Radio Detection and Ranging) sensor 182 and more video cameras 151, e.g. as a front camera, rear camera or side camera. Such sensors are used more and more in vehicles for surroundings observation. Further control devices, such as an automatic driving control unit ADC 184, etc., may be provided in the vehicle. The RADAR and LIDAR sensors 182, 186 could be used for scanning a range up to 150 m or 250 m and the cameras 150, 151 cover a range from 30 to 120 m. The components 182 to 186 are connected to another communication bus 102. The Ethernet-Bus may be a choice for this communication bus 102 due to its higher bandwidth for data transport. One Ethernet-Bus adapted to the special needs of car communication is standardized in the IEEE 802.1Q specification. Moreover, a lot of information for surroundings observation may be received via V2V communication from other road participants. Particularly for those road participants not being in line of sight LOS to the observing vehicle it is very advantageous to receive the information about their position and motion via V2V communication.

Reference number 190 denotes an on-board diagnosis interface.

For the purpose of transmitting the vehicle-relevant sensor data via the communication interface 160 to another vehicle 10 or to a CC computer 320, the gateway 30 is provided. This is connected to the different bus systems 100, 102, 104 and 106. The gateway 30 is adapted to convert the data it receives via the one bus the transmission format of the other bus so that it can be distributed in the packets specified there. For the forwarding of this data to the outside, i.e. to another vehicle 10 or to control central computer 320, the on-board unit 160 is equipped with the communication interface to receive these data packets and, in turn, to convert them into the transmission format of the correspondingly used mobile radio standard. The gateway 30 takes all the necessary format conversions if data are to be exchanged between the different bus systems if required.

Since automated driving is on the rise, a lot more data needs to be exchanged among the road participants and also between the road participants and the network. The communication systems for V2V and V2X communication need to be adapted correspondingly. The 3GPP standard setting organisation has been and is releasing features for the new generation of the 5G cellular mobile communication system, including vehicle-to-everything (V2X) features. A large panel of vehicular use cases have been designed, ranging from infotainment to cooperative driving. Depending on the application, the requirement on the Uu link in the scope of vehicle-to-network (V2N) communication drastically changes. When it comes to safety-related time-critical applications such as ToD, in which a command centre (CC) takes over some driving functions of the vehicle 10, these requirements are the exchange of information with low latency, high data rate and high reliability.

Various possible triggers could exist to initiate a ToD session. Among them there are certain "out of ordinary operating conditions", such as heavy rain, fog, smoke, snow, blinded sensor. All kinds of sensor failures relate to another category of triggers. Then there are triggers which fall under the category of "unknown situations". An example is a traffic light which should be at the place but is not visible. Another example is the existence of an unknown object in the navigation path. Examples are a big plastic bag, a tumble weed and a policeman trying to redirect traffic. Another category concerns a situation which is in principle known but necessitates "a stop of a certain time", e.g. 60 s for safety reason. An example is debris on the path or a sign near a playground which is interpreted as a child.

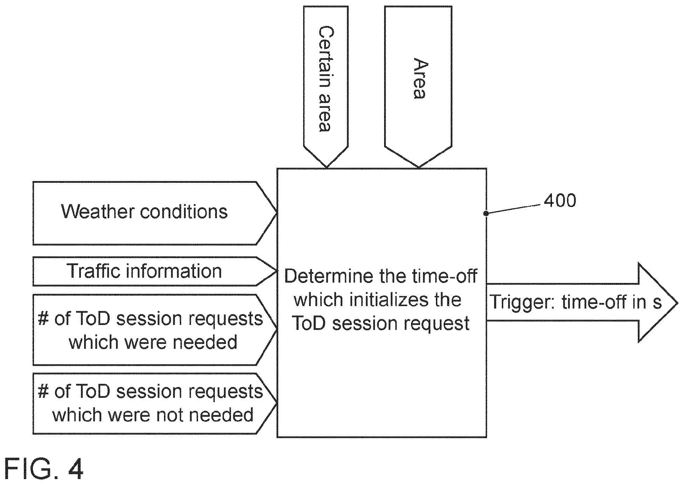

As described above there are plenty of inputs existing based on which an algorithm needs to decide if the current situation requires a start of a ToD session. Fig. 4 illustrates an overview of possible inputs to determine an appropriate time-off trigger in order to initialize a ToD session for an automated vehicle 10. The inputs are:

- Classification of the area

- Certain area

- Weather conditions

- Traffic information

• Number of ToD session requests which were needed in the past

• Number of ToD session requests which were not needed in the past.

From these the classification of the area where the vehicle 10 is located relates to the question: How critical is this area? When it happens on a highway it might be more critical than in an urban area or rural area. The weather conditions may have a great influence on the sensor information. In bad weather with heavy rain, it typically is impossible to evaluate the images captured by the various cameras 150, 151 the car is equipped with.

The automatic driving control unit 184 comprises an algorithm with which it will be determined the time-off time the vehicle 10 has to wait before initializing the sending of a ToD session request. Such algorithm is labelled with reference number 400 in Fig. 4. The output of the algorithm 400 is a time-off time in seconds which is appropriate in the present situation. This corresponds to the appropriate waiting time the automatic driving control unit 184 should wait before sending the ToD session request via gateway 30 and communication module 160 to the CC computer 320.

Once the ADC unit 184 receives the time-off time from the algorithm 400 it will start an internal counter (ToD_StartofSessionCounter) which counts backwards, with the finality that when this counter reaches the value 0, the ToD session must be initiated.

Of course as there are many events that could make an automated vehicle to be on a static position without the possibility to move forward, this approach could therefore provide false trigger events and initiate unwanted ToD sessions. These however will be detected by the CC computer 320 and recorded in a table. Such table could be regarded as a kind of history information for the determined time-off times. The history information will then be used as a feedback information to improve the time-off value determination algorithm. The way this works will be described hereinafter.

To reduce the number of false trigger events, while using this internal counter approach, it is added the use of additional variables (conditionals) in order to filter events that are known by the automated vehicle and stop the internal counter mechanism. The use of a second layer that will filter the triggering process of the ToD session adds an important value of known processes to make more efficient the request of a ToD session. It is expected as artificial intelligence functionality could be applied that the number of identified known processes will be reduced to the minimum with the possibility to trigger false requests. In a preferred embodiment the algorithm runs in the ADC unit 184 in the vehicle 10. The time-off values for different situations may be provided in this preferred embodiment by the CC computer 320. This then is the place where far more history information is available thus making it possible to determine more appropriate time off values as it could ever be done in the vehicle itself.

This concept focuses on a method that will allow the identification of the need to initiate a ToD session based on the ToD_StartofSessionCounter and the conditional elements that the vehicle 10 can determine while is in a deadlock situation and on the proposed time-off from the CC computer 320.

At the CC there is a computer working place equipped with a number of monitors where a person is responsible for traffic control in a certain region. His job consists basically of the task of governance, surveillance and controlling. It is noted that on some neuralgic places there are surveillance cameras (not shown) installed, the video streams of which will be transferred to the CC, too, where they will be displayed on a monitor. He will take over control of the automatic vehicle 10. By remote control, the vehicle 10 will be controlled to pass the truck 12. Vehicle 10 will be steered to drive partly over the sidewalk to pass the truck 12. After the vehicle 10 has been steered around the truck 12, the tele-operator hands back full control to the automatic driving function in vehicle 10.

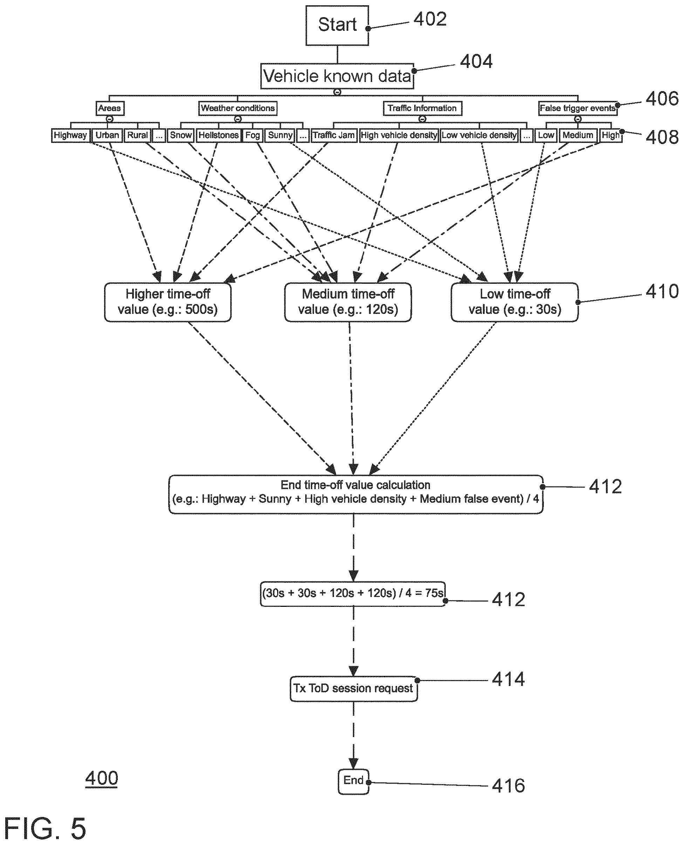

Fig. 5 shows the principle how the algorithm 400 works. The flow of the algorithm 400 is from top to down. The start of the algorithm is labelled with reference number 402. It starts when the vehicle stops longer than 10 s. With this algorithm 400 the time-off time which the vehicle 10 needs to wait before it may send an automatic generated ToD session request to the CC is determined in dependence the vehicle 400 is situated in. The first step 404 comprises of the assembly of the vehicle known data. This data is taken or derived from the vehicle's own sensors, such as Radar 182, Lidar 186, cameras 150, 151, etc. Resulting from these environment detection sensors is a very accurate environment map, in which surrounding objects are represented. These surrounding objects may concern other road participants like other vehicles, bicycles, persons walking on the sidewalk; traffic signs and traffic lights; obstacles in the way, width of a road, width of the sidewalk, and so on. The sensor data is used to derive certain categories of situation describing data. Four different input categories 406 are depicted in Fig. 5, namely "Areas", "Weather conditions", "Traffic Information" and "False trigger events". From these the input categories "Areas", "Weather conditions", and "Traffic Information" belong to input categories 406 the data of which may be derived from sensor data. For the category 406 "False trigger events" the data may be received from the CC computer 320. The CC computer 320, each time the vehicle 10 requests a ToD session either positively acknowledges the entering in the ToD mode or denies it when having evaluated the current situation where the vehicle 10 is stuck in. To evaluate the situation a streaming session is established later on between vehicle 10 and CC computer 320. In this streaming session, the video streams from the cameras 150, 151 and the Radar 182 and Lidar 186 sensors are transferred to the CC computer 320. An Internet streaming protocol such as RTSP corresponding to Real Time Streaming Protocol may be used for that purpose. Those streams will be decoded and presented to the operator in the CC on his number of monitors. Therefore, either the operator or a machine in the CC decides if the situation is requiring ToD or not and either triggers the sending of an acknowledgement for ToD or denies the entering of the ToD session. The statistical analysis may be performed in the vehicle 10 for categorizing the false trigger events.

Fig. 5 shows below the input categories 406 a plurality of elements 408 in the four input categories 406 mentioned above. For the category "Areas" the values "Highway", "Urban" and "Rural" are listed. For the category "Weather conditions" the values "Snow", "Hellstones", "Fog", and "Sunny" are listed. For the category "Traffic Information" the values "Traffic Jam", "High vehicle density" and "Low vehicle density" are listed. For the category "False trigger events" the values "Low", "Medium" and "High" are listed. These example elements 408 result from a relatively coarse subdivision of the full range into three or four intervals and it is noted that in other implementations of the algorithm 400 there may be a refined subdivision of the full range possible.

With arrows it is depicted in Fig. 5 which time-off value is assigned to certain values in the four input categories 406. The algorithm 400 makes use of only three different categories 410 of time-off values, namely "Higher time-off value", e.g. 500 s, "Medium time-off value", e.g. 120 s and "Low time-off value", e.g. 30 s. The example values do not need to be fixed all the time. They could be selected flexibly in dependence of time of day, day of week, week of year, etc. Furthermore, an artificial intelligence function might be applied to optimize these time-off values, too. When such AI-function is located on the CC computer 320, the current values need to be announced to the vehicle 10 from time to time. The situation is described with the values in the four input categories 406, which are selected as indicated with the arrows. For the four values "Urban", "Hellstones", "Traffic Jam", "High" for "False trigger events" the time-off value of 500 s is valid. For other values the time-off value 120 s is valid or 30 s as seen in Fig. 5 when following the other arrows.

The next step 412 concerns the resulting end time-off value calculation. This step includes a calculation of a mean values. In a simple embodiment this comprises the summing-up operation of the by arrows selected time-off values. One example makes it transparent how it works:

Let us consider the four input category values "Highway" + "Sunny" + "High vehicle density" + "Medium false event", describing the present deadlock situation. By taking the assigned time-off values and summing-up them and dividing by 4, the resulting time-off value which is recommended in that situation is achieved. In the given example this leads to the calculation:

$$(30 \text{ s} + 30 \text{ s} + 120 \text{ s} + 120 \text{ s})/4 = 75 \text{ s}.$$

It means that the vehicle 10 in the given situation will wait 75 s before sending out the ToD session request.

Once the final time-off value has been determined, in step 414 the sending of a message with the request to initiate a ToD session will be triggered. The message will be sent to the CC computer 320 via mobile communication. When this step is done, the algorithm 400 stops. The CC computer 320 will then start a streaming session between vehicle 10 and the CC computer 320 as mentioned above. The sensor data of the environment detection sensors will be streamed to the CC computer 320.

It is to be understood that the proposed method and apparatus may be implemented in forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to and executed by a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

The disclosure is not restricted to the exemplary embodiments described here. There is scope for many different adaptations and developments, which are also considered to belong to the disclosure.

**Reference Sign List**

| | |
|-----|---|
| 10 | Vehicle |
| 12 | Truck |
| 14 | Sidewalk |
| 20 | Touch Screen |
| 30 | Gateway |
| 40 | Computing Device |
| 50 | Operation Element Unit |
| 52 | Press Button |
| 60 | Memory Unit |
| 70 | Data Line to Display Unit |
| 80 | Data Line to Memory Unit |
| 90 | Data Line to Operation Element Unit |
| 100 | 1st Data Bus |
| 102 | 2nd Data Bus |
| 104 | 3rd Data Bus |
| 106 | 4th Data Bus |
| 110 | Multifunction Display |
| 120 | Telephone |
| 130 | Navigation System |
| 140 | Radio |
| 150 | Front Camera |
| 151 | Back, Left, Right Camera |
| 160 | On-Board Unit |
| 172 | Engine Control Device |
| 174 | ESP Control Device |
| 176 | Transmission Control Device |
| 182 | RADAR Sensor |
| 184 | Automatic Driving Control Device |
| 186 | LI DAR Sensor |
| 190 | On-Board Diagnosis Interface |
| 200 | Evolved Packet Core |
| 210 | Base Station |
| 220 | Communication Service Prediction Server |
| 300 | Internet |
| 310 | Road Side Unit |
| 320 | Control Center Computer |
| 400 | Algorithm |
| 402 - 416 | different Program Steps of a Computer Program |
| PC5 | V2V Communication Link |
| S1 | S1-Interface |
| Uu | V2N Communication Link |

**Claims**

1. A method for invoking a Tele-operated Driving session for a vehicle (10) equipped with an automated driving function, said vehicle (10) being equipped with a number of environment detection sensors (150, 151, 182, 186) and a communication module (160) for communicating to a Control Center computer (320), the method comprising a step of determining a time-off value for the vehicle (10) in which it needs to wait before a tele-operated driving session may be invoked, corresponding to the current driving situation the vehicle (10) is in, and a step (414) of sending a Tele-operated Driving session request message to said control center computer (320) once the waiting time according to the determined time-off value is over, **characterized by** said step of determining the time-off value comprises a step of data gathering from the environment detection sensors (150, 151, 182, 186) and/or from external data sources, categorizing said gathered data in categories representing corresponding driving situations of the autonomous vehicle comprising at least one category from a set of categories comprising

   - the area where the vehicle is located,
   - weather conditions,
   - traffic information,
   - false trigger events,
   - number of tele-operated driving session requests which were needed in the past,
   - number of tele-operated driving session requests which were not needed in the past, each category comprising a plurality of elements (408) representing a subdivision of the category, such that a time-off value is assigned to each element of each category, and selecting current elements (408) from the categorized data sets (406), wherein said step of selecting current elements (408) comprises a step of selecting those values from the categorized data sets (406) which correspond best to the current driving situation and a step of assigning to the current elements (408) respective time-off values, whereby the time-off value for the vehicle is determined based on the time-off values of the selected elements.

2. The method according to claim 1, further comprising a step (412) of receiving said respective time-off values from the Control Center computer (320).

3. The method according to claim 1 or 2, further comprising a step (412) of calculating an overall time-off value from the respective time-off values assigned to the current elements.

4. The method according to claim 3, wherein the step (412) of calculating an overall time-off value comprises a step of calculating a mean value of the respective time-off values assigned to the current elements (408).

5. The method according to any of claims 1 to 4, wherein the input category "areas" comprises at least the data elements (408) "highway", "urban" and "rural", wherein the input category "weather conditions" comprises at least the data elements (408) "snow", "hellstones", "fog" and "sunny", wherein the input category "traffic information" comprises at least the data elements (408) "traffic jam", "high vehicle density" and "low vehicle density", and wherein the input category "plurality of false trigger events" comprises at least the data elements (408) "low", "medium" and "high".

6. An apparatus adapted for performing the steps in the method according to any one of the previous claims, having implemented a program code to run the method, wherein said apparatus comprises a processing device (184), and memory means for recording the gathered data, wherein said processing device (184) comprises means for determining a time-off value for the vehicle (10) in which it needs to wait before a Tele-operated Driving session may be invoked, corresponding to the current driving situation the vehicle (10) is in, and sending a tele-operated driving session request message to a Control Center computer (320) once the waiting time according to the determined time-off value is over.

7. The apparatus according to claim 6, **characterized in that** the apparatus comprises means (52) for manually triggering by the driver or a passenger in the vehicle (10) the sending of said Tele-operated driving session request message to the Control Center computer (320).

8. The apparatus according to claim 6 or 7, **characterized in that** the processing device (184) is adapted to comprise means for selecting those current elements (408) from categorized data sets (406) which correspond best to the current driving situation and wherein the processing device (184) is adapted to assign to the current elements (408) respective time-off values, wherein the processing device (184) comprises artificial intelligence means for determining said respective time-off values for the elements (408) from the categorized data sets (406) or wherein the processing means (184) are adapted to receive said respective time-off values from the Control Center computer (320).

9. A vehicle (10), **characterized in that** said vehicle (10) is equipped with an apparatus according to any one of claims 6 to 8.

10. A computer program, comprising program code, which when run in a processing device (184) of an apparatus according to any of claims 6 to 8, performs the steps of a method according to any of claims 1 to 5.

**Patentansprüche**

1. Verfahren zum Aufrufen einer ferngesteuerten Fahrsitzung für ein Fahrzeug (10), das mit einer automatisierten Fahrfunktion ausgestattet ist, wobei das Fahrzeug (10) mit einer Anzahl von Umgebungserfassungssensoren (150, 151, 182, 186) und einem Kommunikationsmodul (160) zum Kommunizieren an einen Leitstellenrechner (320) ausgestattet ist, wobei das Verfahren einen Schritt des Bestimmens eines Standzeit-Werts für das Fahrzeug (10), in der es warten muss, bevor eine ferngesteuerte Fahrsitzung aufgerufen werden kann, entsprechend der aktuellen Fahrsituation, in der sich das Fahrzeug (10) befindet, und einen Schritt (414) des Sendens einer der ferngesteuerten Fahrsitzunganforderungsnachricht an den Leitstellenrechner (320) umfasst, sobald die Wartezeit gemäß dem bestimmten Standzeit-Wert abgelaufen ist, **dadurch gekennzeichnet, dass** der Schritt des Bestimmens des Standzeit-Werts einen Schritt der Datensammlung von den Umgebungserfassungssensoren (150, 151, 182, 186) und/oder von externen Datenquellen umfasst, welche die gesammelten Daten in Kategorien kategorisieren, die entsprechende Fahrsituationen des autonomen Fahrzeugs darstellen, die mindestens eine Kategorie aus einem Satz von Kategorien umfassen, die umfassen:

   - den Bereich, in dem sich das Fahrzeug befindet,
   - Wetterbedingungen,
   - Verkehrsinformationen,
   - falsche Triggerereignisse,
   - Anzahl der ferngesteuerten Fahrsitzungsanforderungen, die in der Vergangenheit benötigt wurden,
   - Anzahl von ferngesteuerten Fahrsitzungsanforderungen, die in der Vergangenheit nicht benötigt wurden, wobei jede Kategorie eine Vielzahl von Elementen (408) umfasst, die eine Unterteilung der Kategorie darstellen, so dass ein Standzeit-Wert jedem Element von jeder Kategorie zugewiesen wird, und Auswählen von aktuellen Elementen (408) aus den kategorisierten Datensätzen (406), wobei der Schritt des Auswählens von aktuellen Elementen (408) einen Schritt des Auswählens dieser Werte aus den kategorisierten Datensätzen (406), die am besten der aktuellen Fahrsituation entsprechen, und einem Schritt des Zuweisens zu den aktuellen Elemente (408) jeweilige Standzeit-Werte umfasst, wobei der Standzeit-Wert für das Fahrzeug basierend auf den Standzeit-Werten der ausgewählten Elemente bestimmt wird.

2. Verfahren nach Anspruch 1, ferner umfassend einen Schritt (412) des Empfangens der jeweiligen Standzeit-Werte von dem Leitstellenrechner (320).

3. Verfahren nach Anspruch 1 oder 2, ferner umfassend einen Schritt (412) des Berechnens eines gesamten Standzeit-Werts aus den jeweiligen Standzeit-Werten, die den aktuellen Elementen zugewiesen sind.

4. Verfahren nach Anspruch 3, wobei der Schritt (412) des Berechnens eines gesamten Standzeit-Werts einen Schritt des Berechnens eines Mittelwerts der jeweiligen Standzeit-Werte, die den aktuellen Elementen (408) zugewiesen sind, umfasst.

5. Verfahren nach einem der Ansprüche 1 bis 4, wobei die Eingabekategorie "Bereiche" mindestens die Datenelemente (408) "Autobahn", "Stadt" und "Land" umfasst, wobei die Eingabekategorie "Wetterbedingungen" mindestens die Datenelemente (408) "Schnee", "Hagel", "Nebel" und "sonnig" umfasst, wobei die Eingabekategorie "Verkehrsinformationen" mindestens die Datenelemente (408) "Stau", "hohe Fahrzeugdichte" und "niedrige Fahrzeugdichte" umfasst, und wobei die Eingabekategorie "Vielzahl von falschen Triggerereignissen" mindestens die Datenelemente (408) "niedrig", "mittel" und "hoch" umfasst.

6. Vorrichtung, die zum Durchführen der Schritte in dem Verfahren nach einem der vorstehenden Ansprüche ausgelegt ist, welche ein Programmcode zum Ausführen des Verfahrens implementiert hat, wobei die Vorrichtung eine Verarbeitungsvorrichtung (184) und Speichermittel zum Aufzeichnen der gesammelten Daten umfasst, wobei die Verarbeitungsvorrichtung (184) Mittel zum Bestimmen eines Standzeit-Werts für das Fahrzeug (10), in der es warten muss, bevor eine ferngesteuerte Fahrsitzung aufgerufen werden kann, entsprechend der aktuellen Fahrsituation, in der sich das Fahrzeug (10) befindet, und Senden einer ferngesteuerten Fahrsitzungsanforderungsnachricht an einen Leitstellenrechner (320), sobald die Wartezeit gemäß dem bestimmten Standzeit-Wert abgelaufen ist, umfasst.

7. Vorrichtung nach Anspruch 6, **dadurch gekennzeichnet, dass** die Vorrichtung Mittel (52) zum manuellen Auslösen des Fahrers oder eines Fahrgasts in dem Fahrzeug (10) das Senden der ferngesteuerten Fahrsitzungsanforderungsnachricht an den Leitstellenrechner (320) umfasst.

8. Vorrichtung nach Anspruch 6 oder 7, **dadurch gekennzeichnet, dass** die Verarbeitungsvorrichtung (184) ausgelegt ist, um Mittel zum Auswählen dieser aktuellen Elemente (408) aus kategorisierten Datensätzen (406), die am besten der aktuellen Fahrsituation entsprechen, zu umfassen und wobei die Verarbeitungsvorrichtung (184) ausgelegt ist, um den aktuellen Elementen (408) jeweilige Standzeit-Werte zuzuweisen, wobei die Verarbeitungsvorrichtung (184) Mittel der künstlichen Intelligenz zum Bestimmen der jeweiligen Standzeit-Werte für die Elemente (408) aus den kategorisierten Datensätzen (406) umfasst oder wobei die Verarbeitungsmittel (184) ausgelegt sind, um die jeweiligen Standzeit-Werte von dem Leitstellenrechner (320) zu empfangen.

9. Fahrzeug (10), **dadurch gekennzeichnet, dass** das Fahrzeug (10) mit einer Vorrichtung nach einem der Ansprüche 6 bis 8 ausgestattet ist.

10. Computerprogramm, umfassend Programmcode, der, wenn er in einer Verarbeitungsvorrichtung (184) einer Vorrichtung nach einem der Ansprüche 6 bis 8 ausgeführt wird, die Schritte eines Verfahrens nach einem der Ansprüche 1 bis 5 durchführt.

**Revendications**

1. Procédé permettant d'invoquer une session de conduite commandée à distance pour un véhicule (10) équipé d'une fonction de conduite automatisée, ledit véhicule (10) étant équipé d'un certain nombre de capteurs (150, 151, 182, 186) de détection d'environnement et d'un module de communication (160) pour communiquer vers un ordinateur de centre de commande (320), le procédé comprenant une étape de détermination d'une valeur de temporisation pour le véhicule (10) pendant laquelle il doit attendre avant qu'une session de conduite commandée à distance puisse être invoquée, correspondant à la situation de conduite actuelle du véhicule (10), et une étape (414) d'envoi d'un message de demande de session de conduite commandée à distance à destination dudit ordinateur central de commande (320) une fois que le temps d'attente selon la valeur de temporisation déterminée est terminé, **caractérisé par** ladite étape de détermination de la valeur de temporisation comprenant une étape de collecte de données à partir des capteurs (150, 151, 182, 186) de détection d'environnement et/ou à partir de sources de données externes, la catégorisation desdites données collectées dans des catégories représentant des situations de conduite correspondantes du véhicule autonome comprenant au moins une catégorie parmi un ensemble de catégories comprenant

    - la zone où se trouve le véhicule,

- des conditions météorologiques,
- des informations de circulation,
- de faux événements déclencheurs,
- un nombre de demandes de session de conduite commandée à distance qui ont été nécessaires par le passé,
- un nombre de demandes de session de conduite commandée à distance qui n'ont pas été pas nécessaires par le passé, chaque catégorie comprenant une pluralité d'éléments (408) représentant une subdivision de la catégorie, de sorte qu'une valeur de temporisation est attribuée à chaque élément de chaque catégorie, et la sélection des éléments actuels (408) à partir des ensembles de données catégorisés (406), ladite étape de sélection d'éléments actuels (408) comprenant une étape de sélection de ces valeurs à partir des ensembles de données catégorisés (406) qui correspondent au mieux à la situation de conduite actuelle et une étape d'attribution aux éléments actuels (408) des valeurs de temporisation respectives, moyennant quoi la valeur de temporisation pour le véhicule est déterminée sur la base des valeurs de temporisation des éléments sélectionnés.

2. Procédé selon la revendication 1, comprenant en outre une étape (412) de réception desdites valeurs de temporisation respectives de l'ordinateur de centre de commande (320).

3. Procédé selon la revendication 1 ou 2, comprenant en outre une étape (412) de calcul d'une valeur globale de temporisation à partir des valeurs de temporisation respectives attribuées aux éléments actuels.

4. Procédé selon la revendication 3, dans lequel l'étape (412) de calcul d'une valeur globale de temporisation comprend une étape de calcul d'une valeur moyenne des valeurs de temporisation respectives attribuées aux éléments actuels (408).

5. Procédé selon l'une quelconque des revendications 1 à 4, dans lequel la catégorie d'entrée « zones » comprend au moins les éléments de données (408)

   « autoroute », « urbaine » et « rurale », la catégorie d'entrée « conditions météorologiques » comprenant au moins les éléments de données (408)
   « neige », « grêle », « brouillard » et « soleil », la catégorie d'entrée « informations de circulation » comprenant au moins les éléments de données (408)
   « embouteillage », « densité de véhicule élevée » et « faible densité de véhicule », et la catégorie d'entrée « pluralité de faux événements déclencheurs » comprenant au moins les éléments de données (408) « faible », « moyen » et
   « élevé ».

6. Appareil conçu pour effectuer les étapes du procédé selon l'une quelconque des revendications précédentes, ayant mis en œuvre un code de programme pour exécuter le procédé, ledit appareil comprenant un dispositif de traitement (184), et un moyen de mémoire pour enregistrer les données collectées, ledit dispositif de traitement (184) comprenant un moyen pour déterminer une valeur de temporisation pour le véhicule (10) pendant laquelle il doit attendre avant qu'une session de conduite commandée à distance puisse être invoquée, correspondant à la situation de conduite actuelle du véhicule (10), et l'envoi d'un message de demande de session de conduite commandée à distance à un ordinateur de centre de commande (320) une fois que le temps d'attente selon la valeur de temporisation déterminée est terminé.

7. Appareil selon la revendication 6, **caractérisé en ce que** l'appareil comprend un moyen (52) pour déclencher manuellement, par le conducteur ou par un passager dans le véhicule (10), l'envoi dudit message de demande de session de conduite commandée à distance à l'ordinateur de centre de commande (320).

8. Appareil selon la revendication 6 ou 7, **caractérisé en ce que** le dispositif de traitement (184) est conçu pour comprendre un moyen de sélection des éléments actuels (408) à partir d'ensembles de données catégorisés (406) qui correspondent au mieux à la situation de conduite actuelle et le dispositif de traitement (184) étant conçu pour attribuer aux éléments actuels (408) des valeurs de temporisation respectives, le dispositif de traitement (184) comprenant un moyen d'intelligence artificielle pour déterminer lesdites valeurs de temporisation respectives pour les éléments (408) à partir des ensembles de données catégorisés (406) ou le moyen de traitement (184) étant conçu pour recevoir lesdites valeurs de temporisation respectives de l'ordinateur de centre de commande (320).

9. Véhicule (10), **caractérisé en ce que** ledit véhicule (10) est équipé d'un appareil selon l'une quelconque des revendications 6 à 8.

10. Programme informatique, comprenant un code de programme, qui lorsqu'il est exécuté dans un dispositif de traitement (184) d'un appareil selon l'une quelconque des revendications 6 à 8, effectue les étapes d'un procédé selon l'une quelconque des revendications 1 à 5.

FIG. 1

FIG. 2

FIG. 3

FIG. 4

Start — 402

Vehicle known data — 404

Areas | Weather conditions | Traffic Information | False trigger events — 406

Highway | Urban | Rural | ... | Snow | Hailstones | Fog | Sunny | ... | Traffic Jam | High vehicle density | Low vehicle density | ... | Low | Medium | High — 408

Higher time-off value (e.g.: 500s) | Medium time-off value (e.g.: 120s) | Low time-off value (e.g.: 30s) — 410

End time-off value calculation
(e.g.: Highway + Sunny + High vehicle density + Medium false event) / 4 — 412

(30s + 30s + 120s + 120s) / 4 = 75s — 412

Tx ToD session request — 414

End — 416

400

FIG. 5

**EP 3 845 991 B1**

**REFERENCES CITED IN THE DESCRIPTION**

**Patent documents cited in the description**

- US 9507346 B1
- US 20190163176 A1
- US 10466694 B1